# EUROPÄISCHE PATENTSCHRIFT

(11) **EP 2 646 127 B1**
(45) Veröffentlichungstag und Bekanntmachung des Hinweises auf die Patenterteilung: **30.03.2016**
(21) Anmeldenummer: 11788189.6
(22) Anmeldetag: 28.11.2011
(51) Int. Cl.: B01D 19/00, B29C 47/00, F04D 15/00

(54) **PUMPENAGGREGAT FÜR EIN KALIBRIERWERKZEUG EINER EXTRUSIONSANLAGE**
PUMP APPARATUS FOR A CALIBRATION TOOL OF AN EXTRUSION PLANT
GROUPE MOTOPOMPE POUR UN OUTIL DE CALIBRAGE D'INSTALLATION D'EXTRUSION

(30) Priorität: 29.11.2010 DE 202010015978 U
(43) Veröffentlichungstag der Anmeldung: 09.10.2013
(73) Patentinhaber: Speck Pumpen Vakuumtechnik GmbH, 91154 Roth (DE)
(72) Erfinder: HÄHRE, Pierre, 91126 Schwabach (DE)
(74) Vertreter: Reitstötter Kinzebach
(86) Internationale Anmeldenummer: PCT/EP2011/071217
(87) Internationale Veröffentlichungsnummer: WO 2012/072601

(56) Entgegenhaltungen:
- WO-A1-01/81675
- CN-A- 101 890 396
- JP-A- 2004 237 264
- JP-A- 2007 260 520
- JP-B2- 3 774 989
- US-A- 5 256 171
- US-A1- 2006 151 167

## Beschreibung

Die vorliegende Erfindung betrifft ein Pumpenaggregat für ein Kalibrierwerkzeug einer Extrusionsanlage.

Extrusionsanlagen zur Herstellung von stranggepressten Profilen, insbesondere von stranggepressten Hohlprofilen aus thermoplastischem Kunststoff, weisen üblicherweise Formgebungseinrichtungen auf, mit welchen die aus einer Extrusionsdüse des Extrusionswerkzeugs austretenden plastischen Profilstränge, beispielsweise Hohlprofile oder Rohre, auf die gewünschten Außen- und Innenabmessungen kalibriert und in den gewünschten Abmessungen eingefroren bzw. zur Erzielung der gewünschten Eigensteifigkeit auf die dazu erforderlichen Temperaturen abgekühlt werden. Typischerweise werden dazu Vakuumkalibriereinrichtungen mit integrierten Kühleinrichtungen verwendet. Die Vakuumkalibriereinrichtung ist dabei so ausgebildet, dass das noch plastische extrudierte Profil mithilfe des angelegten Vakuums an die Formflächen der Kalibrierblenden des Kalibrierwerkzeugs angesaugt wird. Zwischen den Kalibrierblenden können Hohlräume in Form vom Vakuumschlitzen ausgebildet sein. Zur Abkühlung der extrudierten und kalibrierten Profile können Formflächen verwendet werden, in denen Kühlkanäle für ein Temperiermedium, üblicherweise Wasser, ausgespart sind. Außerdem können Kühleinrichtungen wie Wasserbäder, Sprühbäder und ähnliche dem Fachmann bekannte Einrichtungen verwendet werden. Extrusionsanlagen mit derartigen Kalibrierwerkzeugen und entsprechenden Kühleinrichtungen sind beispielsweise in dem Buch von Walter Michaeli" Extrusionswerkzeuge für Kunststoff- und Kautschuk", Karl Hanser Verlag, München/Wien, 2. Auflage, 1991, beschrieben. Außerdem wird beispielhaft auf die Europäische Patentanmeldung EP 0879132 A1 und den dort genannten Stand der Technik verwiesen.

Zur Erzeugung des Unterdrucks an den Werkzeugwänden des Kalibrierwerkzeugs werden üblicherweise Vakuumpumpen verwendet. Durch die Kühlung des Extrudats mit einem flüssigen Kühlmedium, wie beispielsweise Wasser, fällt im Kalibrierwerkzeug deshalb üblicherweise ein Fluidgemisch, das flüssige und gasförmige Medien umfasst, typischerweise ein Wasser-Luft-Gemisch, an, das abgeführt und getrennt werden muss.

In dem deutschen Gebrauchsmuster DE 20206606 U1 wird ein Pumpenaggregat für ein Kalibrierwerkzeug einer Extrusionsanlage beschrieben, das einen Abscheider, der wenigstens einen Fluideinlass für ein Fluidgemisch, das flüssige und gasförmige Medien umfasst, wenigstens einen Fluidauslass und wenigstens einen Gasauslass aufweist, Mittel zur Erzeugung eines Unterdrucks in dem Abscheider, die mit dem Gasauslass und dem Fluideinlass kommunizieren, Mittel zum Absaugen des Fluids, die mit dem Fluidauslass kommunizieren, und Mittel zur Bestimmung des Füllstandes des Fluids in dem Abscheider umfasst. Der Abscheider ist zwischen dem Kalibrierwerkzeug und einer zentralen Vakuumpumpe angeordnet. Die Mittel zur Bestimmung des Füllstandes des Fluids in dem Abscheider umfassen bei der bekannten Vorrichtung eine Schwimmeranordnung, die über eine Stellvorrichtung mit einem an der Mündungsöffnung des Fluidauslasses angeordneten beweglichen Verschlusskörper zusammenwirkt, so dass der Fluidauslass in Abhängigkeit von der Höhe des Wasserspiegels bedarfsweise geöffnet und verschlossen werden kann. Dadurch wird gewährleistet, dass stets nur flüssiges Medium aus dem Abscheider abgeführt wird. Bei einer Ausführungsform ist in dem Pumpenaggregat des Standes der Technik dem ersten Abscheider ein Zyklonabscheider nachgeschaltet, der gewährleistet, dass eine nahezu vollständige Trennung des flüssigen und gasförmigen Mediums erfolgt, so dass ein Ansaugen des flüssigen Mediums in die Vakuumpumpe vermieden wird. Außerdem kann der Gasraum des Zyklonabscheiders als Unterdruckspeicher dienen, so dass ein gezielter Unterdruckaufbau in den einzelnen Unterdrucktanks des Kalibrierwerkzeugs bei gleichzeitiger Trennung der Medien in den beiden Abscheidern erreicht wird. Dazu sind in den Unterdruckleitungen zwischen dem Zyklonabscheider und dem Kalibrierwerkzeug zahlreiche Drosselventile angeordnet.

Das in DE 20206606 U1 beschriebene Pumpenaggregat ist jedoch mit Nachteilen behaftet. So ist die mechanische Schwimmer- und Stelleinrichtung im ersten Flüssigkeitsabscheider störanfällig. Ferner ist die Einstellung des Vakuums im Kalibrierwerkzeug über zahlreiche Drosselventile aufwendig und teuer.

Aus der japanischen Patentanmeldung JP 2007260520 A ist ein Pumpenaggregat bekannt, bei welchem eine Förderpumpe, eine Vakuumpumpe und Abscheider als separate Bauelemente ausgebildet und über ein mit Ventilen versehenes Leitungssystem miteinander verbunden sind.

Der vorliegenden Erfindung liegt daher das technische Problem zugrunde, ein besonders kompaktes Pumpenaggregat für ein Kalibrierwerkzeug einer Extrusionsanlage bereitzustellen, das weniger fehleranfällig und kostengünstig ist.

Gelöst wird dieses technische Problem durch das Pumpenaggregat gemäß vorliegendem Anspruch 1. Vorteilhafte Weiterbildungen der Erfindung sind Gegenstände der abhängigen Ansprüche.

Die Erfindung betrifft demnach ein Pumpenaggregat für ein Kalibrierwerkzeug einer Extrusionsanlage mit einem Abscheider, der wenigstens einen Fluideinlass für ein Fluidgemisch, das flüssige und gasförmige Medien umfasst, wenigstens einen Fluidauslass und wenigstens einen Gasauslass aufweist, Mitteln zur Erzeugung eines Unterdrucks in dem Abscheider, die mit dem Gasauslass und dem Fluideinlass kommunizieren, Mitteln zum Absaugen des Fluids, die mit dem Fluidauslass kommunizieren, und Mitteln zur Bestimmung des Füllstands des Fluids in dem Abscheider, wobei das erfindungsgemäße Pumpenaggregat dadurch gekennzeichnet ist, dass die Mittel zum Absaugen des Fluids wenigstens eine Förderpumpe mit regelbarer Drehzahl umfassen, wobei eine Steuerungseinrichtung vorgesehen ist, welche die Drehzahl der Förderpumpe in Abhängigkeit vom Füllstand des Fluids in dem Abscheider regelt. Es kann demnach ein minimaler Füllstand und ein maximaler Füllstand des Fluids im Abscheider vorgegeben werden, wobei durch die drehzahlgeregelte Förderleistung der Förderpumpe sichergestellt wird, dass sich der Füllstand stets innerhalb des vorgegebenen Bereichs bewegt. Damit kann ohne störanfällige mechanische Schwimmeranordnungen gewährleistet werden, dass die Förderpumpe nicht trocken läuft und gegebenenfalls Gas ansaugt, was den Unterdruck im Kalibrierwerkzeug unkontrolliert verändern könnte. Wenn im vorliegenden Zusammenhang von dem Füllstand des Fluids die Rede ist, so handelt es sich im allgemeinen wiederum um ein Fluidgemisch aus flüssigen und gasförmigen Medien, das aber vorzugsweise gegenüber dem in den Abscheider eintretenden Fluidgemisch in Abhängigkeit von der Trennfähigkeit des Abscheiders zumindest teilweise von dem gasförmigen Medium abgereichert ist. Vorzugsweise wird der Füllstand des Fluids in dem Abscheider im wesentlichen durch das flüssige Medium gebildet, während sich das gasförmige Medium des eintretenden Fluidgemischs in einer über der Flüssigkeit befindlichen Gasform befindet und über die Mittel zur Erzeugung eines Unterdrucks in dem Abscheider durch den Gasauslass des Abscheiders abgesaugt werden kann. Es ist auch möglich, die gasförmigen und flüssigen Medien des in den Abscheider eintretenden Fluidgemisches weitgehend zu trennen, jeweils über den Gasauslass bzw. den Fluidauslass abzuführen, aber vor der Förderpumpe wieder in einer gemeinsamen Auslassleitung zusammenzuführen.

Als Abscheider kommen beliebige, aus dem Stand der Technik bekannte Flüssigkeits-Gas-Abscheider in Frage. Bevorzugt werden in dem erfindungsgemäßen Pumpenaggregat jedoch Abscheider verwendet, die nach dem Zyklonprinzip arbeiten.

Die Förderpumpe zum Absaugen des abgeschiedenen Fluids aus dem Abscheider wird vorzugsweise kontinuierlich betrieben. Die Drehzahl kann abhängig vom Füllstand des Fluids beispielsweise in einem Bereich von 10 bis 100 Hertz, vorzugsweise in einem Bereich von 30 bis 60 Hertz geregelt werden. Als Sicherheitsmassnahme kann jedoch auch vorgesehen sein, dass die Förderpumpe beim Unterschreiten des Mindestfüllstandes abgeschaltet wird.

Gemäß einer Ausführungsform der Erfindung kann der Fluidauslass über eine Auslassleitung mit einer separaten Förderpumpe verbunden sein. Zur Ausbildung eines besonders kompakten Pumpenaggregats ist die Förderpumpe vorzugsweise jedoch derart in den Abscheider integriert, dass das Pumpengehäuse der Förderpumpe den Abscheider umfasst und ein Druckstutzen der Förderpumpe den Fluidauslass des Abscheiders bildet.

Als Förderpumpe kommen alle geeigneten Pumpen in Frage, welche Flüssigkeiten, bzw. Flüssigkeit-Gas-Gemische fördern können. Besonders bevorzugt ist die Förderpumpe jedoch eine Radialradpumpe, die vorzugsweise von einem Elektromotor angetrieben wird.

Erfindungsgemäß umfassen die Mittel zur Erzeugung eines Unterdrucks in dem Abscheider wenigstens eine Vakuumpumpe mit regelbarer Drehzahl, wobei eine Steuerungseinrichtung die Drehzahl der Vakuumpumpe in Abhängigkeit vom Druck des gasförmigen Mediums in den Abscheider bzw. in Abhängigkeit vom Druck des gasförmigen Mediums in dem Kalibrierwerkzeug regelt. Damit wird der konstruktive Aufwand weiter verringert, da zur Einstellung des Unterdrucks im Kalibrierwerkzeug keine bzw. weniger Drosselventile in der vom Pumpenaggregat zum Kalibrierwerkzeug führenden bzw. den zu einzelnen Segmenten des Kalibrierwerkzeugs führenden Leitungen erforderlich sind.

Außerdem kann das Pumpenaggregat bei der Ausführungsform, wo kein regelbares Ventil zwischen Vakuumeinheit und Abscheider angeordnet ist, noch kompakter ausgebildet werden, da es nun auch möglich ist, die Vakuumpumpe direkt in den Abscheider zu integrieren. Erfindungsgemäß umfasst daher das Pumpengehäuse der Vakuumpumpe den Abscheider, wobei ein Druckstutzen der Vakuumpumpe den Gasauslass des Abscheiders bildet.

Erfindungsgemäß sind sowohl die Vakuumpumpe als auch die Fluidförderpumpe in den Abscheider integriert.

Die zur Erzeugung des Unterdrucks verwendete Vakuumpumpe ist vorzugsweise eine Flüssigkeitsvakuumpumpe, die besonders bevorzugt zur Erzeugung eines Vakuums von weniger als 800 mbar absolut eingesetzt wird, oder eine Seitenkanalvakuumpumpe, die bevorzugt zur Erzeugung eines Vakuums von mehr als 800 mbar absolut eingesetzt wird.

Die Mittel zur Bestimmung des Füllstandes des Fluids in dem Abscheider umfassen vorzugsweise einen ersten, am Boden des Abscheiders angeordneten Drucksensor und einen zweiten, im oberen Bereich des Abscheiders angeordneten Drucksensor. Der im oberen Bereich des Abscheiders angeordnete Drucksensor misst den Druck im Gasraum des Abscheiders, während der am Bodenbereich des Abscheiders angeordnete Drucksensor den Gesamtdruck aus Druck im Gasraum und dem durch den Füllstand des Fluids oberhalb des Drucksensors erzeugten Druck misst, so dass aus dem Differenzdruck der Füllstand oberhalb des Drucksensors errechnet werden kann. Es sind selbstverständlich auch andere Vorrichtungen zur Füllstandshöhe verwendbar. Beispielsweise kann ein am Innenmantel des Abscheiders angeordneter Streifen mit mehreren übereinander angeordneten Leitfähigkeitssensoren den Übergang von der flüssigen Phase zum Gasraum detektieren.

Der Fluideinlass des Abscheiders ist vorzugsweise über eine Unterdruckleitung mit einem Kalibrierwerkzeug einer Extrusionsanlage verbunden.

Die Erfindung wird im Folgenden anhand von in den beigefügten Zeichnungen dargestellten bevorzugten Ausführungsformen näher beschrieben. In den Zeichnungen zeigt:
- Fig. 1: eine Seitenansicht einer ersten Ausführungsform des erfindungsgemäßen Pumpenaggregats;
- Fig. 2: eine Draufsicht auf das Pumpenaggregat der Figur 1;
- Fig.3: eine Seitenansicht einer zweiten Ausführungsform des erfindungsgemäßen Pumpenaggregats; und
- Fig. 4: eine Draufsicht auf das Pumpenaggregat der Figur 3.

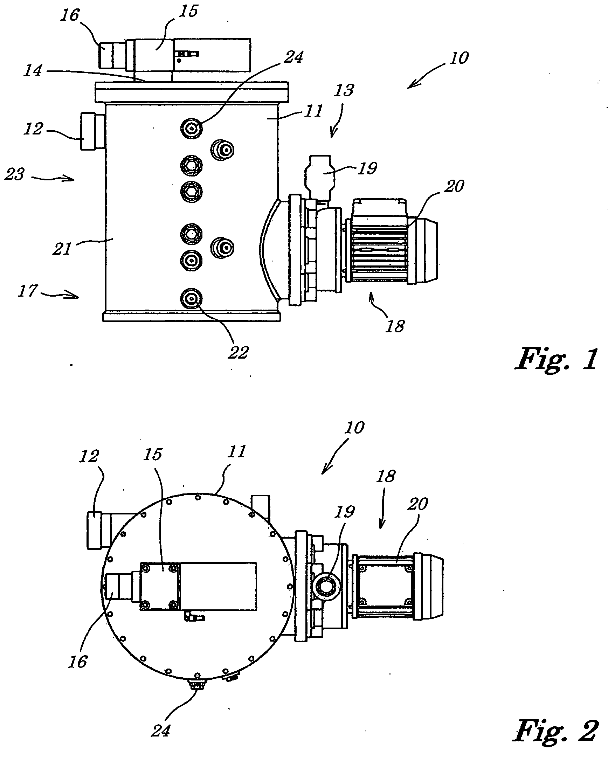

In Figur 1 ist eine erste Ausführungsform des insgesamt mit der Bezugsziffer 10 bezeichneten Pumpenaggregats dargestellt. Das Pumpenaggregat 10 umfasst einen Abscheider 11, der wenigstens einen Fluideinlass 12 für ein Fluidgemisch, das flüssige und gasförmige Medien umfasst, wenigstens einen Fluidauslass 13 und wenigstens einen Gasauslass 14 aufweist. Der Fluideinlass 12 ist über eine (nicht dargestellte) Unterdruckleitung mit einem (ebenfalls nicht dargestellten) Kalibrierwerkzeug einer (nicht dargestellten) Extrusionsanlage verbunden. Für eine detaillierte Beschreibung einer derartigen Extrusionsanlage mit einem oder mehreren Kalibrierwerkzeugen wird auf die EP 0879132 A1 bzw. die DE 20206606 U1 verwiesen. Im dargestellten Beispiel schließt sich an den Gasauslass 14 ein regelbares Drosselventil 15 an, an dessen Anschlussstutzen 16 eine (nicht dargestellte) Unterdruckleitung angeschlossen werden kann, welche den Abscheider 11 mit Mitteln zur Erzeugung eines Unterdrucks, beispielsweise einer in Figur 1 ebenfalls nicht dargstellten Vakuumpumpe verbindet. Über die Vakuumpumpe wird in dem Abscheider 11 ein Unterdruck erzeugt, so dass durch den mit dem Kalibrierwerkzeug verbundenen Fluideinlass 12 ein Fluidgemisch, beispielsweise ein Gas-Wasser-Gemisch vom Kalibrierwerkzeug in den Abscheider 11 gesaugt wird. In dem Abscheider 11 werden die flüssigen und gasförmigen Medien weitgehend getrennt und die gasförmigen Medien über den Gasauslass 14 und den Anschlussstutzen 16 des Drosselventils 15 zur Vakuumpumpe abgesaugt. Im unteren Bereich 17 des Abscheiders 11 sammelt sich das aus dem Fluidgemisch abgetrennte flüssige Medium an, das über eine Förderpumpe 18, beispielsweise eine Radialradpumpe, über den Fluidauslass 13 des Abscheiders abgesaugt wird. Im dargestellten Beispiel ist die Förderpumpe 18 unmittelbar in den Abscheider 11 integriert, so dass der Abscheider 11 als Pumpengehäuse der Förderpumpe 18 dient. Der Fluidauslass 13 wird demnach durch den Druckstutzen 19 der Förderpumpe 18 gebildet. Die Förderpumpe 18 umfasst außerdem einen schematisch dargestellten Antriebsmotor 20, beispielsweise einen Elektromotor. Am Mantel 21 des Abscheiders 11 sind mehrere Anschlüsse für Messeinrichtungen zu erkennen. Im Bodenbereich des Abscheiders 11 befindet sich beispielsweise ein Anschluss 22 für einen ersten Drucksensor, während im Kopfbereich 23 des Abscheiders ein Anschluss für einen zweiten Drucksensor 24 vorgesehen ist. Über die beiden Drucksensoren 22, 24 wird der Füllstand der Flüssigkeit im Abscheider gemessen und über eine (nicht dargestellte) Steuereinrichtung die Förderpumpe 20 so geregelt, dass der Füllstand stets in einem Bereich zwischen vorgegebenen Minimal- und Maximalhöhen bleibt.

Figur 2 zeigt eine Draufsicht auf das Pumpenaggregat der Figur 1.

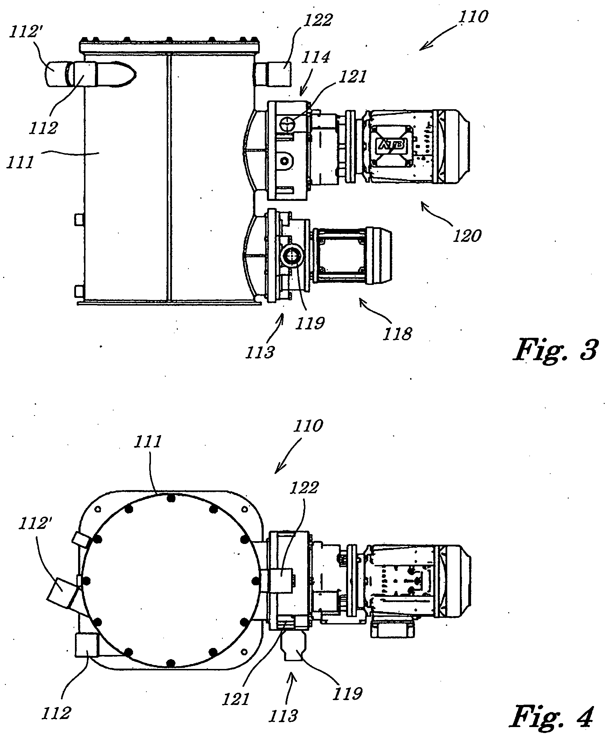

In den Figuren 3 und 4 wird eine zweite Ausführungsform des erfindungsgemäßen Pumpenaggregats für ein Kalibrierwerkzeug einer Extrusionsanlage in einer Seitenansicht bzw. in einer Draufsicht dargestellt. Bauteile, die Bauteilen der Ausführungsform der Figur 1 entsprechen, oder eine vergleichbare Funktion erfüllen, werden mit den gleichen, um 100 erhöhten Bezugsziffern bezeichnet und nicht mehr detaillierter beschrieben.

Das Pumpenaggregat 110 der Figuren 3 und 4 weist wiederum einen Abscheider 111 auf. Der Abscheider 111 weist bei der dargestellte Variante zwei Fluideinlässe 112, 112' für das vom Kalibrierwerkzeug kommende Luft-Wasser-Gemisch auf, welches im Abscheider 111 in seine flüssigen und gasförmigen Bestandteile getrennt wird. Die flüssigen Bestandteile werden wiederum über eine drehzahlgeregelte Förderpumpe 118 durch einen vom Druckstutzen 119 gebildeten Fluidauslass 113 des Abscheiders 111 abgesaugt. Wie im Beispiel der Figuren 1 und 2 ist die Förderpumpe 118 wiederum in den Abscheider 111 integriert.

Die Variante der Figuren 3 und 4 unterscheidet sich von der Variante der Figuren 1 und 2 insbesondere darin, dass zur Erzeugung eines Unterdrucks in dem Abscheider nunmehr eine in den Abscheider 111 integrierte, drehzahlgeregelte Vakuumpumpe 120 vorgesehen ist. Die Drehzahlregelung der Vakuumpumpe kann in Abhängigkeit vom Druck im Gasraum des Abscheiders 111 und/oder vom Druck in der Vakuumeinheit des Kalibrierwerkzeugs erfolgen, so dass zwischen dem Pumpenaggregat 110 und dem Kalibrierwerkzeug kein Drosselventil mehr erforderlich ist. Das über einer der Fluideinlässe 112, 112' oder über beide Einlässe angesaugte und im Abscheider 111 aufgetrennte Gas wird über den Druckstutzen 121 der Vakuumpumpe, der den Gasauslass 114 des Abscheiders 111 bildet, aus dem Abscheider weg gefördert. Falls die integrierte Vakuumpumpe 120 nicht ausreicht, um im Abscheider und insbesondere im Kalibrierwerkzeug den erforderlichen Unterdruck zu erzeugen, kann der Abscheider 111 gegebenenfalls über einen Vakuumstutzen 122 mit einer separaten Vakuumeinheit verbunden werden. Auch der Abscheider 111 ist wie das Ausführungsbeispiel der Figuren 1 und 2 mit (in den Figuren 3 und 4 nicht dargestellten) Drucksensoren zur Überwachung des Füllstandes des Abscheiders versehen.

In den Ausführungsbeispielen der Figuren 1 bis 4 wird die Drehzahl der Förderpumpe 18, 118 über den durch die Drucksensoren ermittelten Füllstand des Fluids in dem Abscheider 11, 111 gesteuert. Bei der Variante der Figuren 3 und 4 kann die Drehzahl der Vakuumpumpe 120 in Abhängigkeit vom Druck des Gases in dem Abscheider 111 geregelt werden. Dazu wiesen die erfindungsgemäßen Pumpenaggregate geeignete, in den Figuren nicht dargestellte Steuerungseinrichtungen auf.

## Patentansprüche

1. Pumpenaggregat für ein Kalibrierwerkzeug, mit
einem Abscheider (11,111), der wenigstens einen Fluideinlass (12,112,112') für ein Fluidgemisch, das flüssige und gasförmige Medien umfasst, wenigstens einen Fluidauslass (13,113) und wenigsten einen Gasauslass (14,114) aufweist,
Mitteln (15,16,120) zur Erzeugung eines Unterdrucks in dem Abscheider (11,111), die mit dem Gasauslass (14,114) und dem Fluideinlass (12,112,112') kommunizieren, wobei die Mittel zur Erzeugung eines Unterdrucks in dem Abscheider (111) wenigstens eine Vakuumpumpe (120) mit regelbarer Drehzahl umfassen, wobei eine Steuerungseinrichtung vorgesehen ist, die Drehzahl der Vakuumpumpe (120) in Abhängigkeit vom Druck des gasförmigen Mediums in dem Abscheider (111) regelt,
Mitteln (18,118) zum Absaugen des Fluids, die mit dem Fluidauslass (13,113) kommunizieren, und Mitteln (22,24) zur Bestimmung des Füllstandes des Fluids in dem Abscheider,
wobei die Mittel zum Absaugen des Fluids wenigstens eine Förderpumpe (18,118) mit regelbarer Drehzahl umfassen, wobei eine Steuerungseinrichtung vorgesehen ist, welche die Drehzahl der Förderpumpe in Abhängigkeit vom Füllstand des Fluids in dem Abscheider (11,111) regelt, **dadurch gekennzeichnet,**
**dass** die Förderpumpe (18,118) derart in den Abscheider (11,111) integriert ist, dass das Pumpengehäuse der Förderpumpe (18,118) den Abscheider (11,111) umfasst und ein Druckstutzen (19,119) der Förderpumpe (18,118) den Fluidauslass (13,113) des Abscheiders (11,111) bildet,
und **dass** die Vakuumpumpe (120) derart in den Abscheider (111) integriert ist, dass das Pumpengehäuse der Vakuumpumpe (120) den Abscheider (111) umfasst und ein Druckstutzen (121) der Vakuumpumpe (120) den Gasauslass (114) des Abscheiders (111) bildet.

2. Pumpenaggregat gemäß Anspruch 1, **dadurch gekennzeichnet, dass** der Abscheider (11,111) ein nach dem Zyklonprinzip arbeitender Abscheider ist.

3. Pumpenaggregat gemäß einem der Ansprüche 1 oder 2, **dadurch gekennzeichnet, dass** die Förderpumpe (18,118) eine Radialradpumpe ist.

4. Pumpenaggregat gemäß einem der Ansprüche 1 bis 3, **dadurch gekennzeichnet, dass** die Vakuumpumpe (120) eine Flüssigkeitsring-Vakuumpumpe oder eine Seitenkanalvakuumpumpe ist.

5. Pumpenaggregat gemäß einem der Ansprüche 1 bis 4, **dadurch gekennzeichnet, dass** die Mittel zur Bestimmung des Füllstandes des Fluids in dem Abscheider einen ersten im unteren Bereich (17) des Abscheiders (11,111) angeordneten Drucksensor (22) und einen zweiten im oberen Bereich (23) des Abscheiders (11,111) angeordneten Drucksensor (24) umfassen.

6. Pumpenaggregat gemäß einem der Ansprüche 1 bis 5, **dadurch gekennzeichnet, dass** der Fluideinlass (12,112) des Abscheiders (11,111) über eine Unterdruckleitung mit einem Kalibrierwerkzeug einer Extrusionsanlage verbunden ist.

## Claims

1. Pump assembly for a calibrating tool, having
a separator (11, 111) which comprises at least one fluid inlet (12, 112, 112') for a fluid mixture containing liquid and gaseous media, at least one fluid outlet (13, 113) and at least one gas outlet (14, 114),
means (15, 16, 120) for producing negative pressure in the separator (11, 111), which communicate with the gas outlet (14, 114) and the fluid inlet (12, 112, 112'), the means for producing negative pressure in the separator (111) comprising at least one variable-speed vacuum pump (120), a controller being provided which regulates the speed of the vacuum pump (120) dependent on the pressure of the gaseous medium in the separator (111),
means (18, 118) for aspirating the fluid, which communicate with the fluid outlet (13, 113), and
means (22, 24) for determining the fill level of the fluid in the separator,
the means for aspirating the fluid comprising at least one variable-speed delivery pump (18, 118), a controller being provided which regulates the speed of the delivery pump dependent on the fill level of the fluid in the separator (11, 111),
**characterised in that**
the delivery pump (18, 118) is integrated in the separator (11, 111) such that the pump housing of the delivery pump (18, 118) envelops the separator (11, 111) and a pressure connection (19, 119) of the delivery pump (18, 118) forms the fluid outlet (13, 113) of the separator (11, 111),
and **in that** the vacuum pump (120) is integrated in the separator (111) such that the pump housing of the vacuum pump (120) envelops the separator (111) and a pressure connection (121) of the vacuum pump (120) forms the gas outlet (114) of the separator (111).

2. Pump assembly according to claim 1, **characterised in that** the separator (11, 111) is a separator operating according to the cyclone principle.

3. Pump assembly according to one of claims 1 or 2, **characterised in that** the delivery pump (18, 118) is a radial wheel pump.

4. Pump assembly according to one of claims 1 to 3, **characterised in that** the vacuum pump (120) is a liquid ring vacuum pump or a side channel vacuum pump.

5. Pump assembly according to one of claims 1 to 4, **characterised in that** the means for determining the fill level of the fluid in the separator comprise a first pressure sensor (22) arranged in the lower region (17) of the separator (11, 111) and a second pressure sensor (24) arranged in the upper region (23) of the separator (11, 111).

6. Pump assembly according to one of claims 1 to 5, **characterised in that** the fluid inlet (12, 112) of the separator (11, 111) is connected to a calibrating tool of an extrusion apparatus via a vacuum line.

## Revendications

1. Groupe de pompage pour un outil d'étalonnage, avec un séparateur (11, 111) qui comprend au moins une entrée de fluide (12, 112, 112') pour un mélange de fluide, qui contient des fluides liquides et gazeux, au moins une sortie de fluide (13, 113) et au moins une sortie de gaz (14, 114),
des moyens (15, 16, 120) pour la génération d'une dépression dans le séparateur (11, 111), qui communiquent avec la sortie de gaz (14, 114) et l'entrée de fluide (12, 112, 112'), les moyens de génération d'une dépression dans le séparateur (111) comprenant au moins une pompe à vide (120) avec une vitesse de rotation réglable, un dispositif de commande étant prévu, qui régule la vitesse de rotation de la pompe à vide (120) en fonction de la pression du fluide gazeux dans le séparateur (111),
des moyens (18, 118) pour l'aspiration du fluide, qui communiquent avec la sortie du fluide (13, 113), et
des moyens (22, 24) pour la détermination du niveau de remplissage du fluide dans le séparateur,
les moyens d'aspiration du fluide comprenant au moins une pompe (18, 118) avec une vitesse de rotation réglable, un dispositif de commande étant prévu, qui régule la vitesse de rotation de la pompe en fonction du niveau de remplissage du fluide dans le séparateur (11, 111),
**caractérisé en ce que**
la pompe (18, 118) est intégrée dans le séparateur (11, 111) de façon à ce que le carter de la pompe (18, 118) englobe le séparateur (11, 111) et un manchon sous pression (19, 119) de la pompe (18, 118) forme la sortie de fluide (13, 113) du séparateur (11, 111).
et **en ce que** la pompe à vide (120) est intégrée dans le séparateur (111) de façon à ce que le carter de la pompe à vide (120) englobe le séparateur (111) et un manchon sous pression (121) de la pompe à vide (120) forme la sortie de gaz (114) du séparateur (111).

2. Groupe de pompage selon la revendication 1, **caractérisé en ce que** le séparateur (11, 111) est un séparateur fonctionnant selon le principe du cyclone.

3. Groupe de pompage selon l'une des revendications 1 ou 2, **caractérisé en ce que** la pompe (18, 118) est une pompe radiale.

4. Groupe de pompage selon l'une des revendications 1 à 3, **caractérisé en ce que** la pompe à vide (120) est une pompe à vide à anneau liquide ou une pompe à vide à canal latéral.

5. Groupe de pompage selon l'une des revendications 1 à 4, **caractérisé en ce que** les moyens de détermination du niveau de remplissage du fluide dans le séparateur comprennent un premier capteur de pression (22) disposé dans la zone inférieure (17) du séparateur (11, 111) et un deuxième capteur de pression (24) disposé dans la zone supérieure (23) du séparateur (11, 111).

6. Groupe de pompage selon l'une des revendications 1 à 5, **caractérisé en ce que** l'entrée de fluide (12, 112) du séparateur (11, 111) est reliée par l'intermédiaire d'une ligne à dépression avec un outil d'étalonnage d'une installation d'extrusion.
